# EUROPÄISCHE PATENTSCHRIFT

(11) **EP 3 613 640 B1**
(45) Veröffentlichungstag und Bekanntmachung des Hinweises auf die Patenterteilung: **27.10.2021**
(21) Anmeldenummer: 19191820.0
(22) Anmeldetag: 14.08.2019
(51) Int. Cl.: B60R 21/231, B60R 21/232, B60R 21/2338

(54) **SEITENGASSACK FÜR EIN FAHRZEUGINSASSEN-RÜCKHALTESYSTEM, FAHRZEUGINSASSEN-RÜCKHALTESYSTEM SOWIE FAHRZEUG**
VEHICLE OCCUPANT RESTRAINT SYSTEM, VEHICLE AND SIDE AIRBAG FOR A VEHICLE OCCUPANT RESTRAINT SYSTEM
COUSSIN GONFLABLE LATÉRAL POUR UN SYSTÈME DE RETENUE ARRIÈRE DE L'OCCUPANT DE VÉHICULE, SYSTÈME DE RETENUE ARRIÈRE DE L'OCCUPANT DE VÉHICULE AINSI QUE VÉHICULE

(30) Priorität: 21.08.2018 DE 102018120415
(43) Veröffentlichungstag der Anmeldung: 26.02.2020
(73) Patentinhaber: Dalphi Metal España, S.A., 36213 Vigo (ES)
(72) Erfinder: SANTÍN NAVARRO, Pedro, José, 36204 Vigo (ES); GONZÁLEZ LÓPEZ, Cristina, 36206 Vigo (ES)
(74) Vertreter: ZF Patentabteilung - DIPS

(56) Entgegenhaltungen:
- DE-U1-202005 011 553
- DE-U1-202006 010 442
- US-A1- 2007 052 212
- US-A1- 2007 152 430
- US-A1- 2011 272 928
- US-B2- 6 991 255

## Beschreibung

Die Erfindung betrifft einen Seitengassack für ein Fahrzeuginsassen-Rückhaltesystem, ein Fahrzeuginsassen-Rückhaltesystem für ein Fahrzeug, sowie ein Fahrzeug mit einem Fahrzeuginsassen-Rückhaltesystem.

Fahrzeuginsassen-Rückhaltesysteme mit Seitengassäcken sind bekannt, wobei dem Entfaltungsverhalten der Seitengassäcke aufgrund der großen Fensterfläche und dem entsprechend geringen Montageraum in Fahrzeugen eine große Bedeutung zukommt.

Solche Seitengassäcke dienen insbesondere dem Kopfschutz bei einem Seitenaufprall und sind am Dachrahmen und/oder einer der - von vorne nach hinten mit A, B, C oder D-Säule bezeichneten - Fahrzeugsäulen angeordnet. Damit unterscheiden sie sich von sitz- oder türbrüstungsintegrierten Gassäcken, die vor allem für den Thoraxschutz ausgelegt sind.

Insbesondere bei kleineren Seitengassäcken, die lediglich für eine einzelne Sitzreihe eines Fahrzeugs vorgesehen sind (Single-Row Gassäcke), ist eine korrekte Entfaltung notwendig, um eine gewünschte Geometrie, die unter Umständen mittels Fangbändern erreicht wird, zu gewährleisten.

Ein gewünschtes Entfaltungsverhalten wird üblicherweise dadurch erreicht, dass der Seitengassack über mehrere Befestigungsstellen an der Karosserie oder karosseriefesten Bauteilen des Fahrzeugs befestigt ist.

Solche Befestigungsstellen erhöhen jedoch die Produktions- und Montagekosten des Fahrzeuginsassen-Rückhaltesystems.

Die US 2011/0272928 A1 zeigt einen derartigen Single-Row Gassack mit mehreren Befestigungsstellen und einer Unterteilungsnaht, die die Kammer des Gassacks in Teilkammern unterteilt und sich von der Gegenseite zur Einblasseite hin in die Kammer erstreckt.

Es ist daher Aufgabe der Erfindung, einen Seitengassack, ein Fahrzeuginsassen-Rückhaltesystem sowie ein Fahrzeug mit einem Fahrzeuginsassen-Rückhaltesystem bereitzustellen, die geringe Fertigungs- und Montagekoste haben und gleichzeitig ein kontrolliertes Entfaltungsverhalten des Seitengassacks gewährleisten.

Die Aufgabe wird gelöst durch einen Seitengassack für ein Fahrzeuginsassen-Rückhaltesystem eines Fahrzeugs, der für die Anbringung oberhalb der Fahrertür an der Karosserie des Fahrzeugs oder karosseriefesten Bauteilen vorgesehen ist, mit einer Einblasseite und einer der Einblasseite gegenüberliegenden Gegenseite, zwischen denen im aufgeblasenen Zustand des Seitengassacks eine Kammer des Seitengassacks vorgesehen ist. Der Seitengassack ist dazu ausgelegt, die Insassen einer einzigen Sitzreihe des Fahrzeugs zurückzuhalten, wobei der Seitengassack eine Sperre aufweist, die sich von der Gegenseite zur Einblasseite hin in die Kammer hinein erstreckt und die eine Gasströmung entlang der Gegenseite zumindest teilweise blockiert. Zum Beispiel blockiert die Sperre den Gasstrom vollständig.

Der Erfindung liegt die Erkenntnis zugrunde, dass das Entfaltungsverhalten von Seitengassäcken am besten kontrolliert werden kann, wenn die Entfaltungsrichtung von der Einblasseite zur Gegenseite verläuft. Durch die Sperre wird nun eine Gasströmung entlang der Gegenseite verhindert bzw. verzögert, die eine Entfaltung senkrecht zur gewünschten Entfaltungsrichtung zur Folge hätte. Im erfindungsgemäßen Seitengassack strömt das Gas also überwiegend von der Einblasseite zur Gegenseite, wodurch sich der Seitengassack ebenfalls von der Einblasseite zur Gegenseite hin kontrolliert aufbläst, also in der gewünschten Entfaltungsrichtung.

Der Seitengassack ist insbesondere ein Einzelreihenseitengassack (Single-Row Gassack). Beispielsweise hat der Seitengassack genau eine Kammer zum Rückhalten von Fahrzeuginsassen.

In einer Ausgestaltung der Erfindung erstreckt sich die Sperre im Wesentlichen senkrecht und/oder im mittleren Drittel der Gegenseite von der Gegenseite, um ein gleichmäßiges Entfaltungsverhalten zu erreichen.

Um den Seitengassack kostengünstig herzustellen, kann der Seitengassack wenigstens zwei Seitenwänden aufweisen, die die Kammer einschließen, wobei die Einblasseite und/oder die Gegenseite zumindest teilweise durch eine Naht zwischen den Seitenwänden gebildet sein kann.

Vorzugsweise ist die Sperre durch eine Naht gebildet, insbesondere eine Naht zwischen den beiden Seitenwänden, wodurch die Sperre besonders kostengünstig ausgeführt werden kann. Zum Beispiel erstreckt sich die Sperre von der Naht der Gegenseite aus.

In einer besonders kosteneffektiven Variante können die Sperre und die Naht der Gegenseite als eine Naht ausgeführt sein.

Um ein schnelles Entfalten des Seitengassacks zu gewährleisten, kann sich die Sperre von der Gegenseite bis zu einem Endpunkt erstrecken, der näher an der Gegenseite als an der Einblasseite liegt.

In einer Ausführungsform der Erfindung weist der Seitengassack einen Einblasmund auf, der in der Einblasseite vorgesehen ist, insbesondere wobei eine gedachte Verlängerung der Sperre eines der Enden des Einblasmundes schneidet. Auf diese Weise kann das Entfaltungsverhalten noch präziser eingestellt werden.

Um einen gleichmäßigen Gasstrom in die Kammer zu gewährleisten, kann der Seitengassack einen Einblasbereich aufweisen, der auf der von der Gegenseite und der Kammer abgewandten Seite des Einblasmundes vorgesehen ist, wobei der Einblasbereich zur Verbindung mit einem Gasgenerator ausgebildet sein kann. Dabei können der Einblasbereich und die Kammer mittels des Einblasmundes miteinander fluidisch verbunden sein.

Erfindungsgemäß weist der Seitengassack genau eine Befestigungsstelle auf, die zur Befestigung des Seitengassacks am Fahrzeug ausgebildet ist, wobei die Befestigungsstelle an der Einblasseite, insbesondere einem Längsende der Einblasseite vorgesehen ist. Auf diese Weise kann der Seitengassack sicher und kostengünstig an der Karosserie oder karosseriefesten Bauteilen des Fahrzeugs befestigt werden.

Dabei entspricht die Längsrichtung beispielsweise im Wesentlichen der Längsrichtung des Fahrzeugs bei vorgesehener Verwendung des Seitengassack.

Zum Beispiel ist die Befestigungsstelle am vorderen Ende des Seitengassacks, d.h. dem dem Bug des Fahrzeugs zugewandten Ende vorgesehen. Insbesondere ist nur eine Befestigungsstelle vorgesehen, wobei optional der Einblasbereich zur Befestigung an der Karosserie ausgebildet sein kann.

In einer Ausführungsform der Erfindung weist der Seitengassack eine Vorderseite und ein Fangband auf, insbesondere wobei sich das Fangband von der Vorderseite erstreckt. Auf diese Weise lässt sich die Geometrie des Seitengassacks im aufgeblasenen Zustand genauer einstellen. Dabei ist die Vorderseite in Bezug zur Längsrichtung des Fahrzeugs definiert.

Ferner wird die Aufgabe gelöst durch ein Fahrzeuginsassen-Rückhaltesystem für ein Fahrzeug, mit einem erfindungsgemäßen Seitengassack und einem Gasgenerator, der mit dem Einblasbereich verbunden ist.

Die Aufgabe wird zudem durch ein Fahrzeug mit einem erfindungsgemäßen Fahrzeuginsassen-Rückhaltesystem gelöst, wobei der Seitengassack im Bereich nur einer Sitzreihe des Fahrzeugs angeordnet ist.

Vorzugsweise ist der Seitengassack nur auf der Einblasseite, insbesondere nur mittels der Befestigungsstelle, und optional mittels des Fangbandes und/oder dem Einblasbereich mit der Karosserie oder karosseriefesten Bauteilen des Fahrzeugs verbunden, wodurch die Montage des Fahrzeuginsassen-Rückhaltesystems stark vereinfacht wird.

Zum Beispiel ist das Fangband an der A-Säule befestigt.

Weitere Merkmale und Vorteile der Erfindung ergeben sich aus der nachfolgenden Beschreibung sowie aus den beigefügten Zeichnungen, auf die Bezug genommen wird. In den Zeichnungen zeigen:
- Figur 1 einen Teil eines erfindungsgemäßen Fahrzeugs mit einem erfindungsgemäßen Fahrzeuginsassen-Rückhaltesystem mit einem erfindungsgemäßen Seitengassack,
- Figur 2 eine Schnittansicht des Seitengassacks nach Figur 1 entlang der Linie II-II, und
- Figur 3 eine zweite Ausführungsform eines erfindungsgemäßen Seitengassacks in Seitenansicht.

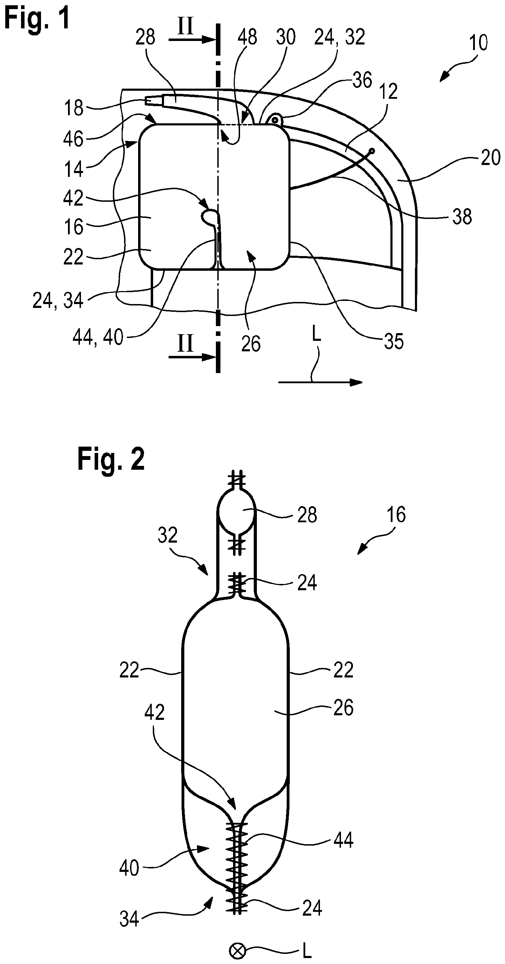

In Figur 1 ist ein Teil eines Fahrzeugs 10 dargestellt. Genauer gesagt ist der Bereich der Fahrertür 12 des Fahrzeugs 10 aus dem Innenraum des Fahrzeugs 10 teilweise zu sehen. Auf die Darstellung von Details des Innenraums, wie dem Fahrersitz, wurde aus Gründen der Übersichtlichkeit verzichtet.

Der Bereich der Fahrertür 12 ist mit einem Fahrzeuginsassen-Rückhaltesystem 14 ausgestattet, das in den Figuren im ausgelösten Zustand dargestellt ist.

Das Fahrzeuginsassen-Rückhaltesystem 14 umfasst wenigstens einen Seitengassack 16 und einen Gasgenerator 18, die beide oberhalb der Fahrertür 12 an der Karosserie 20 des Fahrzeugs 10 oder karosseriefesten Bauteilen angebracht sind.

Gut zu erkennen ist, dass das Fahrzeuginsassen-Rückhaltesystem 14 und somit auch der Seitengassack 16 nur für die vordere Sitzreihe des Fahrzeugs 10 ausgelegt sind.

Selbstverständlich kann das Fahrzeuginsassen-Rückhaltesystem 14 und damit auch der Seitengassack 16 für die Beifahrerseite oder aber auch für genau eine andere Sitzreihe ausgelegt sein.

Der Seitengassack 16 ist somit ein Einzelreihengassack (Single-Row Gassack).

In Figur 2 ist eine Schnittansicht durch den Seitengassack 16 im aufgeblasenen Zustand dargestellt. Der Seitengassack 16 weist, wie in Figur 2 zu erkennen ist, zwei Seitenwände 22 auf, die mittels einer Naht 24 miteinander verbunden sind.

Die Naht 24 umläuft nahezu den gesamten Umfang des Seitengassacks 16, sodass die beiden Seitenwände 22 eine Kammer 26 einschließen, die im Falle eines Unfalls den Fahrzeuginsassen zurückhält.

Der Seitengassack 16 weist lediglich eine einzige Kammer 26 zur Rückhaltung auf.

Denkbar ist selbstverständlich auch, dass mehr als zwei Seitenwände zum Einsatz kommen, oder dass die beiden Seitenwände 22 aus einem Stück Stoff hergestellt sind.

Zudem weist der Seitengassack 16 einen Einblasbereich 28 auf, an dem der Gasgenerator 18 vorgesehen ist. Auch der Einblasbereich 28 kann durch die beiden Seitenwände 22 durch entsprechende Nähte gebildet sein.

Der Einblasbereich 28 mündet in die Kammer 26 an einem Einblasmund 30, der an einer der Seiten der Kammer 26 vorgesehen ist. Die Kammer 26 und der Einblasbereich 28 sind somit über den Einblasmund 30 fluidisch verbunden. Der Einblasbereich 28 ist also auf der von der Kammer 26 abgewandten Seite des Einblasmundes 30 vorgesehen.

Die Seite des Seitengassacks 16, in der der Einblasmund 30 vorgesehen ist, wird dementsprechend als Einblasseite 32 bezeichnet.

Die Seite, die der Einblasseite 32 gegenüberliegt, wird als Gegenseite 34 bezeichnet. Die Kammer 26 erstreckt sich somit zwischen der Einblasseite 32 und der Gegenseite 34.

Im gezeigten Ausführungsbeispiel befindet sich die Einblasseite 32 im aufgeblasenen Zustand des Seitengassacks 16 oben und die Gegenseite 34 liegt im gezeigten Ausführungsbeispiel unten.

Die Einblasseite 32 und die Gegenseite 34 sind durch eine Vorderseite 35 und eine Rückseite verbunden.

Sowohl die Einblasseite 32 als auch die Gegenseite 34 liegen im aufgeblasenen Zustand im Wesentlichen parallel zur Längsrichtung L des Fahrzeugs 10.

Beide sind im gezeigten Ausführungsbeispiel durch die Naht 24 gebildet. Auch die Vorderseite 35 kann durch die Naht 24 gebildet sein.

An der Einblasseite 32 ist im gezeigten Ausführungsbeispiel zudem eine Befestigungsstelle 36 vorgesehen, die zum Beispiel als Lasche ausgeführt sein kann. Die Lasche ist beispielsweise mit der Naht 24 vernäht.

Die Befestigungsstelle 36 ist im gezeigten Ausführungsbeispiel am vorderen Längsende der Einblasseite 32 vorgesehen, d. h. sie ist in Längsrichtung L des Fahrzeugs 10 an dem Ende der Einblasseite 32 vorgesehen, die zum Bug des Fahrzeugs 10 hin gerichtet ist.

Die Befestigungsstelle 36 ist an der Karosserie 20 des Fahrzeugs 10 oder einem karosseriefesten Bauteil des Fahrzeugs 10 befestigt.

Außerdem weist der Seitengassack 16 im gezeigten Ausführungsbeispiel ein Fangband 38 auf, das den Seitengassack 16 ebenfalls mit der Karosserie 20 verbindet.

Das Fangband 38 erstreckt sich beispielsweise von der Vorderseite 35 aus und ist mit der Karosserie 20, genauer gesagt der A-Säule verbunden.

Auch das Fangband 38 erstreckt sich im Wesentlichen entlang der Längsachse L im aufgeblasenen Zustand des Seitengassacks 16.

Erfindungsgemäß ist der Seitengassack 16 lediglich über die genau eine Befestigungsstelle 36 mit der Karosserie 20 oder karosseriefesten Bauteilen des Fahrzeugs 10 verbunden, abgesehen von dem Fangband 38.

Zusätzlich kann der Seitengassack 16 über den Einblasbereich 28 bzw. den Gasgenerator 18 und/oder das Fangband 38 mit der Karosserie 20 oder karosseriefesten Bauteilen des Fahrzeugs 10 verbunden sein.

Die Gegenseite 34 dagegen ist nicht direkt mit der Karosserie 20 oder karosseriefesten Bauteilen des Fahrzeugs 10 verbunden.

Um eine gewünschte Gasströmung beim Aufblasen des Seitengassacks 16 zu erreichen, ist an der Gegenseite 34 eine Sperre 40 vorgesehen.

Die Sperre 40 ist im ersten Ausführungsbeispiel in der Mitte der Gegenseite 34 vorgesehen und sie erstreckt sich von der Gegenseite 34 im Wesentlichen senkrecht zur Einblasseite 32 hin und endet an einem Endpunkt 42.

Der Endpunkt 42 liegt näher an der Gegenseite 34 als an der Einblasseite 32, sodass sich die Sperre 40 über weniger als die Hälfte der Höhe des Seitengassacks 16 erstreckt.

Im gezeigten Ausführungsbeispiel ist die Sperre 40 durch eine weitere Naht 44 zwischen den beiden Seitenwänden 22 gebildet. Selbstverständlich kann die Sperre 40 jedoch auch anders ausgestaltet sein, beispielsweise durch ein zusätzliches Bauteil oder Stück Stoff.

Im gezeigten Ausführungsbeispiel ist die Sperre 40 vollständig geschlossen, sodass kein Gas durch die Sperre 40 strömen kann.

Denkbar ist selbstverständlich auch, dass die Sperre teilweise gasdurchlässig ist, um eine definierte Gasströmung entlang der Gegenseite 34 zu ermöglichen.

Im Verhältnis zum Einblasmund 30 ist die Sperre 40 so angeordnet, dass eine gedachte Verlängerung der Sperre 40 den Einblasmund nicht schneidet. Insbesondere verläuft die gedachte Verlängerung zwischen dem Einblasmund 30 und dem Gasgenerator 18. Zum Beispiel verläuft die gedachte Verlängerung auf der Seite des Einblasmundes 30, die der Mitte des Seitengassacks 16 in Längsrichtung zugewandt ist.

Durch die Sperre 40 wird das Entfaltungsverhalten des Seitengassacks 16 beim Aufblasen, d. h. beim Betätigen des Gasgenerators 18 verbessert.

Beim Betätigen des Gasgenerators 18 strömt durch den Einblasmund 30 das vom Gasgenerator erzeugte Gas in die Kammer 26 des in diesem Moment noch nicht aufgeblasenen Seitengassacks 16.

Beim Entfalten und Aufblasen der Kammer 26 entsteht eine Gasströmung innerhalb der Kammer 26 (in Figur 1 durch Pfeile symbolisiert), die hauptsächlich in Richtung der Gegenseite 34 gerichtet ist.

Durch die Sperre 40 an der Gegenseite 34 wird eine Strömung des Gases entlang der Gegenseite 34 jedoch zumindest teilweise blockiert, sodass gewährleistet ist, dass die Gasströmung überwiegend von der Einblasseite 32 zur Gegenseite 34 verläuft. Auf diese Weise wird sichergestellt, dass die Kammer 26 und der Seitengassack 16 sich ebenfalls von der Einblasseite 32 zur Gegenseite 34 entfalten, und diese Entfaltungsbewegung nicht durch eine Querströmung entlang der Gegenseite 34 in Längsrichtung L gestört wird.

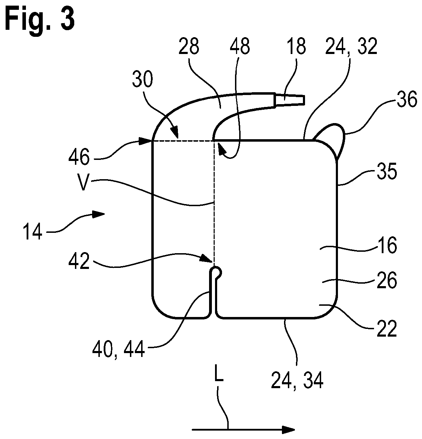

In Figur 3 ist eine zweite Ausführungsform des Seitengassacks 16 dargestellt, die im Wesentlichen der der ersten Ausführungsform entspricht. Im Folgenden wird daher lediglich auf die Unterschiede eingegangen und gleiche und funktionsgleiche Teile sind mit denselben Bezugszeichen versehen.

In der zweiten Ausführungsform ist der Einblasmund 30 nicht mittig in der Einblasseite 32 angeordnet, sondern grenzt an ein Ende der Einblasseite 32 in Längsrichtung L an, hier an dem hinteren Ende 46.

Die Sperre 40 ist in dieser Ausführungsform nicht mittig an der Gegenseite 34 angeordnet, sondern befindet sich lediglich im mittleren Drittel der Gegenseite 34 in Längsrichtung L.

Außerdem ist die Position der Sperre 40 so gewählt, dass eine gedachte Verlängerung V der Sperre 40 genau das Ende 48 des Einblasmundes 30 schneidet, das der Mitte des Seitengassacks 16 bzw. der Vorderseite 35 zugewandt ist.

In dieser Ausführungsform ist zudem die Naht 44 der Sperre 40 und die Naht 24 der Seitenwände 22 als eine einzige, durchgehende Naht ausgeführt, um Herstellungskosten zu sparen.

Außerdem weist der Seitengassack 16 in dieser Ausführungsform kein Fangband auf, sondern ist lediglich über die Befestigungsstelle 36 und optional den Einblasbereich 28 bzw. den Gasgenerator 18 mit der Karosserie 20 oder karosseriefesten Bauteilen des Fahrzeugs 10 verbunden.

## Patentansprüche

1. Seitengassack für ein Fahrzeuginsassen-Rückhaltesystem (14) eines Fahrzeugs (10), der für die Anbringung oberhalb der Fahrertür (12) an der Karosserie (20) des Fahrzeugs (10) oder karosseriefesten Bauteilen vorgesehen ist, mit einer Einblasseite (32) und einer der Einblasseite (32) gegenüberliegenden Gegenseite (34), zwischen denen im aufgeblasenen Zustand des Seitengassacks eine Kammer (26) des Seitengassacks (16) vorgesehen ist,
wobei der Seitengassack (16) dazu ausgelegt ist, die Insassen einer einzigen Sitzreihe des Fahrzeugs (10) zurückzuhalten,
wobei der Seitengassack (16) eine Sperre (40) aufweist, die sich von der Gegenseite (34) zur Einblasseite (32) hin in die Kammer (26) hinein erstreckt und die eine Gasströmung entlang der Gegenseite (34) zumindest teilweise blockiert,
**dadurch gekennzeichnet,**
**dass** der Seitengassack (16) genau eine Befestigungsstelle (36) aufweist, die zur Befestigung des Seitengassacks (16) am Fahrzeug (10) ausgebildet ist, wobei die Befestigungsstelle (36) an der Einblasseite (32), insbesondere einem Längsende der Einblasseite (32) vorgesehen ist.

2. Seitengassack nach Anspruch 1, **dadurch gekennzeichnet, dass** sich die Sperre (40) im Wesentlichen senkrecht und/oder im mittleren Drittel der Gegenseite (34) von der Gegenseite (34) erstreckt.

3. Seitengassack nach Anspruch 1 oder 2, **dadurch gekennzeichnet, dass** der Seitengassack (16) wenigstens zwei Seitenwänden (22) aufweist, die die Kammer (26) einschließen, wobei die Einblasseite (32) und/oder die Gegenseite (34) zumindest teilweise durch eine Naht (24) zwischen den Seitenwänden (22) gebildet ist.

4. Seitengassack nach einem der vorhergehenden Ansprüche, **dadurch gekennzeichnet, dass** die Sperre (40) durch eine Naht (44) gebildet ist, insbesondere eine Naht (44) zwischen den beiden Seitenwänden (22).

5. Seitengassack nach einem der vorhergehenden Ansprüche, **dadurch gekennzeichnet, dass** sich die Sperre (40) von der Gegenseite (34) bis zu einem Endpunkt erstreckt, der näher an der Gegenseite (34) als an der Einblasseite (32) liegt.

6. Seitengassack nach einem der vorhergehenden Ansprüche, **dadurch gekennzeichnet, dass** der Seitengassack (16) einen Einblasmund (30) aufweist, der in der Einblasseite (32) vorgesehen ist, insbesondere wobei eine gedachte Verlängerung (V) der Sperre (40) eines der Enden (48) des Einblasmundes (30) schneidet.

7. Seitengassack nach Anspruch 6, **dadurch gekennzeichnet, dass** der Seitengassack (16) einen Einblasbereich (28) aufweist, der auf der von der Gegenseite (34) und der Kammer (26) abgewandten Seite des Einblasmundes (30) vorgesehen ist, wobei der Einblasbereich (28) zur Verbindung mit einem Gasgenerator (18) ausgebildet ist.

8. Seitengassack nach einem der vorhergehenden Ansprüche, **dadurch gekennzeichnet, dass** der Seitengassack (16) eine Vorderseite (35) und ein Fangband (38) aufweist, insbesondere wobei sich das Fangband (38) von der Vorderseite (35) erstreckt.

9. Fahrzeuginsassen-Rückhaltesystem für ein Fahrzeug (10), mit einem Seitengassack (16) nach einem der vorhergehenden Ansprüche und einem Gasgenerator (18), der mit dem Einblasbereich (28) verbunden ist.

10. Fahrzeug mit einem Fahrzeuginsassen-Rückhaltesystem (14) nach Anspruch 9, wobei der Seitengassack (16) im Bereich nur einer Sitzreihe des Fahrzeugs (10) angeordnet ist.

11. Fahrzeug nach Anspruch 10, **dadurch gekennzeichnet, dass** der Seitengassack (16) nur auf der Einblasseite (32), insbesondere nur mittels der Befestigungsstelle (36), und optional mittels des Fangbandes (38) und/oder dem Einblasbereich (28) mit der Karosserie (20) oder karosseriefesten Bauteilen des Fahrzeugs (10) verbunden ist.

## Claims

1. A side airbag for a vehicle occupant restraint system (14) of a vehicle (10) which is provided for being disposed on the body (20) above the driver door (12) of the vehicle (10) or on components fixed to the body comprising an injection side (32) and an opposite side (34) opposed to the injection side (32) between which a chamber (26) of the side airbag (16) is provided in the inflated condition of the side airbag,
wherein the side airbag (16) is configured to restrain the occupants of one single seat row of the vehicle (10),
wherein the side airbag (16) includes a barrier (40) extending from the opposite side (34) to the injection side (32) into the chamber (26) and at least partly blocking a gas flow along the opposite side (34),
**characterized in that**
the side airbag (16) is provided with exactly one fastening point (36) configured for fastening the side airbag (16) to the vehicle (10), wherein the fastening point (36) is provided on the injection side (32), especially at a longitudinal end of the injection side (32).

2. The side airbag according to claim 1, **characterized in that** the barrier (40) extends substantially perpendicularly and/or in the central third of the opposite side (34) from the opposite side (34).

3. The side airbag according to claim 1 or 2, **characterized in that** the side airbag (16) includes at least two side walls (22) enclosing the chamber (26), with the injection side (32) and/or the opposite side (34) being formed at least partly by a seam (24) provided between the side walls (22).

4. The side airbag according to any one of the preceding claims, **characterized in that** the barrier (40) is formed by a seam (44), especially a seam (44) between the two side walls (22).

5. The side airbag according to any one of the preceding claims, **characterized in that** the barrier (40) extends from the opposite side (34) to an end point which is closer to the opposite side (34) than to the injection side (32).

6. The side airbag according to any one of the preceding claims, **characterized in that** the side airbag (16) includes an injection nozzle (30) provided in the injection side (32), especially with an imaginary extension (V) of the barrier (40) intersecting either of the ends (48) of the injection nozzle (30).

7. The side airbag according to claim 6, **characterized in that** the side airbag (16) includes an injection area (28) which is provided on the side of the injection nozzle (30) facing away from the opposite side (34) and from the chamber (26), the injection area (28) being formed for connection to an inflator (18).

8. The side airbag according to any one of the preceding claims, **characterized in that** the side airbag (16) has a front side (35) and a tether (38), especially with the tether (38) extending from the front side (35).

9. A vehicle occupant restraint system for a vehicle (10) comprising a side airbag (16) according to any one of the preceding claims and an inflator (18) which is connected to the injection area (28).

10. The vehicle comprising a vehicle occupant restraint system (14) according to claim 9, wherein the side airbag (16) is arranged in the area of only one seat row of the vehicle (10).

11. The vehicle according to claim 10, **characterized in that** the side airbag (16) is connected to the body (20) or components fixed to the body of the vehicle (10) only on the injection side (32), especially only by means of the fastening point (36), and optionally via the tether (38) and/or the injection area (28).

## Revendications

1. Coussin gonflable latéral pour un système de retenue des occupants d'un véhicule (14) équipant un véhicule (10), qui est destiné à être monté au-dessus de la porte du conducteur (12) sur la carrosserie (20) du véhicule (10) ou sur des composants fixés à la carrosserie, comprenant un côté injection (32) et un côté opposé (34) au côté injection (32), entre lesquels, à l'état gonflé du coussin gonflable latéral, est prévue une chambre (26) du coussin gonflable latéral (16),
pour lequel le coussin gonflable latéral (16) est conçu pour retenir les occupants d'une seule rangée de sièges du véhicule (10),
pour lequel le coussin gonflable latéral (16) possède une barrière (40), laquelle s'étend dans la chambre (26) depuis le côté opposé (34) au côté injection (32) et qui bloque au moins partiellement un écoulement de gaz le long du côté opposé (34),
**caractérisé**
**en ce que** le coussin gonflable latéral (16) présente précisément un point de fixation (36) qui est conçu pour la fixation du coussin gonflable latéral (16) au véhicule (10), pour lequel le point de fixation (36) est prévu sur le côté injection (32), en particulier à une extrémité longitudinale du côté injection (32).

2. Coussin gonflable latéral selon la revendication 1, **caractérisé en ce que** la barrière (40) s'étend sensiblement perpendiculairement et/ou dans le tiers central du côté opposé (34) à partir du côté opposé (34).

3. Coussin gonflable latéral selon la revendication 1 ou 2, **caractérisé en ce que** le coussin gonflable latéral (16) présente au moins deux parois latérales (22) entourant la chambre (26), pour lequel le côté injection (32) et/ou le côté opposé (34) est au moins partiellement formé par une couture (24) entre les parois latérales (22).

4. Coussin gonflable latéral selon l'une des revendications précédentes, **caractérisé en ce que** la barrière (40) est formée par une couture (44), en particulier une couture (44) entre les deux parois latérales (22).

5. Coussin gonflable latéral selon l'une des revendications précédentes, **caractérisé en ce que** la barrière (40) s'étend depuis le côté opposé (34) jusqu'à un point d'extrémité qui est plus proche du côté opposé (34) que du côté injection (32).

6. Coussin gonflable latéral selon l'une des revendications précédentes, **caractérisé en ce que** le coussin gonflable latéral (16) présente une bouche d'injection (30) prévue dans le côté injection (32), en particulier pour lequel un prolongement imaginaire (V) de la barrière (40) coupe l'une des extrémités (48) de la bouche d'injection (30).

7. Coussin gonflable latéral selon la revendication 6, **caractérisé en ce que** le coussin gonflable latéral (16) présente une zone d'injection (28) qui est prévue sur le côté de la bouche d'injection (30) opposé au côté opposé (34) et à la chambre (26), pour lequel la zone d'injection (28) est conçue pour le raccordement à un générateur de gaz (18).

8. Coussin gonflable latéral selon l'une quelconque des revendications précédentes, **caractérisé en ce que** le coussin gonflable latéral (16) présente une face avant (35) et une bande d'accrochage (38), en particulier pour lequel la bande d'accrochage (38) s'étend depuis la face avant (35).

9. Système de retenue d'un occupant de véhicule pour un véhicule (10), comprenant un coussin gonflable latéral (16) selon l'une quelconque des revendications précédentes et un générateur de gaz (18) relié à la zone d'injection (28).

10. Véhicule avec un système de retenue des occupants du véhicule (14) selon la revendication 9, pour lequel le coussin gonflable latéral (16) est disposé dans la région d'une seule rangée de sièges du véhicule (10).

11. Véhicule selon la revendication 10, **caractérisé en ce que** le coussin gonflable latéral (16) n'est relié à la carrosserie (20) ou à des composants fixés à la carrosserie du véhicule (10) que du côté injection (32), en particulier uniquement au moyen du point de fixation (36), et éventuellement au moyen de la bande d'accrochage (38) et/ou de la zone d'injection (28).
